# EUROPEAN PATENT SPECIFICATION

(11) **EP 4 463 006 B1**
(45) Date of publication and mention of the grant of the patent: **17.12.2025**
(21) Application number: 23700674.7
(22) Date of filing: 10.01.2023
(51) Int. Cl.: A23G 1/30, A23G 1/54, A23G 3/34, A23G 3/42, A23G 3/54

(54) **A CONFECTIONERY COMPOSITION**
SÜSSWARENZUSAMMENSETZUNG
COMPOSITION DE CONFISERIE

(30) Priority: 10.01.2022 EP 22150731
(43) Date of publication of application: 20.11.2024
(73) Proprietor: Société des Produits Nestlé S.A., 1800 Vevey (CH)
(72) Inventor: LAZIDIS, Aristodimos, YORK, Yorkshire YO30 4UH (GB); WHITEHOUSE, Andrew Steven, Leeds Road HARROGATE, Yorkshire HG2 8AY (GB)
(74) Representative: Slaven, John William
(86) International application number: PCT/EP2023/050433
(87) International publication number: WO 2023/131716

(56) References cited:
- EP-A1- 0 938 848
- WO-A1-03/068000
- US-B2- 10 555 543

## Description

### Background of the invention

Dulce de leche is a confection from Latin America that is prepared from the slow heating of sweetened milk. It is eaten alone or used to flavour sweet foods, such as cakes, churros, cookies, waffles, crème caramel and ice creams.

Alternative names for this composition are Doce de leite, Manjar, Cajeta and Arequipe.

However, the confection is not sufficient stable to be used as a filling material for confectionery over the time periods and conditions of typical industrial confectionery manufacture and commercial sale. By stable it is meant the texture becomes gritty, the product spoils etc.

US 10 555 543 B2 discloses composition of caramels, toffees and fudges can vary widely depending on the required intensity of colour and taste as well as the texture.

Accordingly, the present invention provides a stabilised composition that does not undergo sugar crystallisation over a period sufficient for the composition to be used industrially.

There are few alternative compositions that have been launched. The alternative compositions that are currently available suffer from the use of non-clean label preservatives, which still do not provide a complete protection against product spoiling and mould growth on the product. Additionally, the products available often have inferior textures and far from the creamy, smooth texture that fresh dulce de leche has.

The present invention seeks to solve the above problems using a selection of ingredients that afford the required shelf-life stability and texture, preferably without the use of ingredients that consumers do not trust or accept.

However, the key advantages of the present invention are the provision of aqueous-based confectionery compositions with acceptable organoleptic properties and the necessary stability to be prepared industrially and sold commercially.

### Summary of the invention

The present invention is defined by the claims.

The present invention discloses a confectionery composition comprising: water in an amount of 10.0-30.0 wt%, a sucrose content of less than 25.0wt%, a combination of at least two of L-glucose, D-glucose (dextrose), fructose, maltose and maltotriose in an amount of 20.0-45.0wt%, and milk solids in an amount of 15.0-35.0wt%.

The present invention provides a confectionery, preferably dulce de leche, composition which surprisingly preserves a smooth texture and avoids grittiness, preferably without utilizing preservatives that do not provide the same benefits. In addition, it may, in certain embodiments lead, to a short ingredient list using only natural ingredients.

As shown in the examples section, a number of known solutions to the issues of crystallizations in other food systems did not provide the solution to the above-mentioned problems.

The present invention provides a confectionery, preferably dulce de leche, composition comprising:
water in an amount of 10.0-30.0 wt%,
a sucrose content of less than 25.0wt%,
a combination of at least two of L-glucose, D-glucose (dextrose), fructose, maltose and maltotriose in an amount of 20.0-45.0wt%, and
   milk solids in an amount of 15.0-35.0wt%.

The present invention also provides a confectionery, preferably dulce de leche, composition comprising:
water in an amount of 10.0-30.0 wt%,
a sucrose content of less than 25.0wt%,
a combination of at least two of L-glucose, D-glucose (dextrose), fructose, maltose and maltotriose in an amount of 20.0-45.0wt%, and milk solids in an amount of 15.0-35.0wt%, wherein the composition has a water activity of less than or equal to 0.72.

In a preferred embodiment of the present invention, the sucrose content is greater than or equal to 5.0wt% or greater than or equal to 10.0wt%. In a preferred embodiment of the present invention, the sucrose content is less than or equal to 19.0wt%

In a preferred embodiment of the present invention, the composition comprises a glucose syrup, preferably wherein the glucose syrup has a DE value in the range of 35-95 and is present in an amount of 2.5-15.0wt%.

In a preferred embodiment of the present invention, the composition comprises a fructose corn syrup preferably in an amount of 20.0-45.0wt%, preferably 25.0wt%-40.0wt%.

In an embodiment, the present invention provides a filled confectionery product comprising the composition of the invention.

### Detailed description

### General Definitions

When a composition is described herein in terms of wt%, this means a combination of the ingredients on a wet basis, i.e. the actual weight, unless indicated otherwise. Accordingly, for the product claims, the composition of the present invention contains water, the wt% are for the overall composition. For the process claims and where specified as a starting component in the product claims (e.g. the stabilising agent wt%), the wt% refers to the mixture of ingredients prior to heating to provide the composition of the present invention.

Unless defined otherwise, all technical and scientific terms used herein have and should be given the same meaning as commonly understood by one of ordinary skill in the art to which this invention belongs.

Unless the context clearly indicates otherwise, as used herein plural forms of the terms herein are to be construed as including the singular form and vice versa.

In all ranges defined above, the end points are included within the scope of the range as written unless otherwise written (e.g. "less than" or "greater than"). Additionally, the end points of the broadest ranges in an embodiment and the end points of the narrower ranges may be combined.

It will be understood that the total sum of any quantities expressed herein as percentages cannot (allowing for rounding errors) exceed 100%. For example, the sum of all components of which the composition of the invention (or part(s) thereof) comprises may, when expressed as a weight (or other) percentage of the composition (or the same part(s) thereof), total 100% allowing for rounding errors. However, where a list of components is non exhaustive the sum of the percentage for each of such components may be less than 100% to allow a certain percentage for additional amount(s) of any additional component(s) that may not be explicitly described herein.

As used herein, unless the context indicates otherwise, standard conditions for measuring conditions means, atmospheric pressure, a relative humidity of 50% ±5%, ambient temperature (20°C ±2°) and an air flow of less than or equal to 0.1m/s. Unless otherwise indicated all the tests herein are carried out under standard conditions as defined herein.

### Water

The composition of the present invention comprises water in an amount of between 10.0wt% and 30.0wt%, preferably between 11.0wt% and 27.5wt%, preferably 11.0wt% and 25.0wt%, preferably the amount of water is between 12.0wt% and 22.5wt%, preferably 13.0wt% and 20.0wt%.

In a preferred embodiment, the water content of the present invention is measured using Karl Fischer titration.

In a preferred embodiment, the water activity of the composition of the present invention is less than or equal to 0.72, preferably between 0.72 and 0.50, preferably between 0.72 and 0.60, preferably between 0.70 and 0.60, preferably between 0.70 and 0.62 and preferably between 0.64 and 0.675.

As shown by the results in the examples, highly preferred embodiments have water activities between 0.40 and 0.70, more preferably between 0.50 and 0.675 and more preferably between 0.60 and 0.675.

In a preferred embodiment, the water activity is measured using water activity meter (for example from Novasina). It defines the water activity by measuring the vapour pressure of a sample of the composition in closed chamber once equilibrium is reached. The vapour pressure is defined using a resistive-electrolytic sensor.

### Sugar Distribution

The use of the various sugars in the ingredients for the composition of the present invention provides the solution to the above-mentioned problems. The examples highlight that a large number of known solutions in the art do not provide the necessary control of crystallization and subsequent disadvantageous organoleptic properties, in contrast to the present invention.

The use of the sugar mix preferably provides a product with the requisite stability to display a water activity that is commercially viable. This agent also preferably assists in providing the necessary crystal structures to provide the desired particle sizes.

Unless specified otherwise, the percentages given below relate to a weight percentage of the composition of the present invention.

The composition of the present invention comprises a sucrose content of less than 25.0wt%, preferably less than 22.5wt%, more preferably less than 20.0wt%, preferably less than or equal to 19.5wt%, preferably less than or equal to 19.0wt%, preferably less than or equal to 18.5wt% and preferably less than or equal to 18.0wt%.

The composition of the present invention comprises a sucrose content of more than 2.5wt%, preferably more than or equal to 5.0wt%, preferably more than or equal to 7.5wt%, preferably more than or equal to 10.0wt% and preferably more than or equal to 11.0wt%.

The composition of the present invention highly preferably comprises a sucrose content of 2.5wt% to less than 20.0wt%, preferably 5.0wt%-19.5wt%, preferably 7.5wt%- 19.0wt%, and preferably 10.0wt% and 18.0wt%.

The composition of the present invention comprises a combination of at least two of L-glucose, D-glucose (dextrose), fructose, maltose and maltotriose in an amount of 20.0-45.0wt%.

In a preferred embodiment, the composition of the present invention comprises the combination of at least two of L-glucose, dextrose, fructose, maltose and maltotriose is in an amount of 22.0-42.5wt%, preferably 22.0-40.0wt% and most preferably 25.0-37.5wt%.

In a preferred embodiment, the combination of dextrose, fructose, maltose and maltotriose comprises at least three, more preferably four, of dextrose, fructose, maltose and maltotriose.

In a preferred embodiment, the composition of the present invention comprises lactose in an amount of between 0.0wt% or 1.0wt% and 10.0wt%, preferably between 1.5wt% and 7.5wt% and most preferably between 2.5wt% and 6.0wt%.

In a preferred embodiment, the composition of the present invention comprises galactose in an amount of between 1.5wt% and 4.5wt%, preferably 2.0wt% and 3.75wt%.

In a preferred embodiment, the composition of the present invention comprises dextrose, preferably in an amount of between 7.5wt% and 30.0wt%, preferably between 10.0wt% and 30.5wt%, preferably between 12.0wt% and 30.0wt%, preferably between 15.0 and 30.0wt% and more preferably between 16.0wt% and 25.0wt% and 16.0wt% and 22.5wt%.

In a preferred embodiment, the composition of the present invention comprises fructose, preferably in an amount of between 5.0wt% and 25.0wt%, preferably between 7.5wt% and 20.0wt%, preferably between7.5wt% and 19.0wt%, preferably between 9.0wt% and 18.0wt% and most preferably between 10.0wt% and 17.5wt%.

In a preferred embodiment, the composition of the present invention comprises maltose preferably in an amount of between 0.02wt% and 3.5wt%, preferably between 0.05wt% and 3.0wt% and most preferably between 0.075wt% and 2.5wt%.

In a preferred embodiment, the composition of the present invention comprises maltotriose preferably in an amount of between 0.02wt% and 2.5wt%, preferably between 0.05wt% and 2.0wt% and most preferably between 0.075wt% and 1.0wt%.

In a preferred embodiment, the composition of the present invention a total carbohydrate content of between 50.0wt% and 70.0wt%, preferably between 52.5wt% and 67.5wt%, preferably between 55.0wt% and 65.0wt% and most preferably between 57.5wt% and 62.5wt%.

In a highly preferred embodiment, the composition comprises:
dextrose in an amount of between 7.5wt% and 30.0wt%,
fructose in an amount of between 5.0wt% and 25.0wt%, and
sucrose in an amount of less than or equal to 19.5wt%.

In a highly preferred embodiment, the composition comprises:
dextrose in an amount of between 7.5wt% and 30.0wt%,
fructose in an amount of between 5.0wt% and 20.0wt%, and
sucrose in an amount of less than or equal to 19.5wt%, with a total carbohydrate content of between 50.0 and 70.0wt%.

In a particularly highly preferred embodiment, the composition comprises:
dextrose in an amount of between 16.0wt% and 30.5wt%,
fructose in an amount of between 7.5wt% and 20.0wt%, and
sucrose in an amount of between 5.0wt% and 19.5 wt%.

In a particularly highly preferred embodiment, the composition comprises:
dextrose in an amount of between 16.0wt% and 30.5wt%,
fructose in an amount of between 7.5wt% and 20.0wt%, and
sucrose in an amount of between 5.0wt% and 19.5 wt%, with a total carbohydrate content of between 55.0 and 65.0wt%.

In a highly preferred embodiment, in the above preferred embodiments, the compositions further comprise lactose in an amount of between 1.0wt% and 10.0wt% and galactose in an amount of between 1.5wt% and 4.5wt%.

In a preferred embodiment, the present invention comprises a glucose syrup.

Glucose syrups are well known in the art and are obtained by hydrolysis of starches, generally vegetable starches. They may have a variable composition but are generally classified on the basis of their dextrose equivalence (DE) value. Glucose syrups are described in Glucose Syrups, Technology and Applications, Peter Hull, Wiley-Blackwell 2010.

In a preferred embodiment, the glucose syrup has a DE value in the range of 35-95, preferably in the range of 35-70, more preferably in the range of 35-63 and most preferably in the range of 35-50.

In a preferred embodiment, the glucose syrup is present in an amount of 2.5-15.0wt% based on the weight of the composition, preferably 3.0-12.5wt%, preferably 3.5-10.0wt% and most preferably 4.0-9.5wt%.

In a preferred embodiment, the present invention comprises a fructose corn syrup.

Fructose corn syrups are well known in the art and are also known as glucose-fructose, isoglucose and glucose-fructose syrup is a sweetener made from corn starch. As in the production of conventional corn syrup, the starch is broken down into glucose by enzymes. To make the fructose corn syrup, the corn syrup is further processed by D-xylose isomerase to convert some of its glucose into fructose. Common commercially used syrups are "HFCS 42" and "HFCS 55" and this nomenclature refers to dry weight fructose compositions of 42% and 55% respectively, the rest typically being glucose or glucose and an amount of other carbohydrates.

In a preferred embodiment, the fructose corn syrup is present in an amount of 20.0-45.0wt% based on the weight of the composition, preferably 22.0-40.0wt%, preferably 25.0-40.0wt% and most preferably 27.5-37.5wt%.

In highly preferred embodiments, the present invention the composition comprises both a glucose syrup and a fructose corn syrup, preferably the glucose syrup is present in an amount of 2.5-15.0wt% and the fructose corn syrup is present in an amount of 20.0-45.0wt%, more preferably 3.5-10.0wt% and 25.0-40.0wt%.

### Protein and Fat

The preferred range of protein in the composition according to the invention is between 2.0wt% and 15.0wt%, and most preferably between 3.0wt% and 10.0wt%.

The preferred range of fat in the composition according to the invention is between 2.5wt% and 20.0wt%, preferably between 5.5wt% and 16.0wt%, preferably between 7.5wt% and 14.0wt%, and most preferably between 8.0wt% and 12.0wt%.

Hence, a preferred embodiment of the present invention is a composition comprising between 2.0wt% and 15.0wt% protein and between 2.5wt% and 20.0wt% fat.

### Milk Component

As mentioned above, the composition of the present invention is preferably prepared from sweetened milk products.

In a preferred embodiment, the composition of the invention comprises milk solids in an amount of between 15.0wt% and 35.0wt%, preferably between 18.0wt% and 35.0wt%, preferably 18.0wt% and 30.0wt%, and more preferably between 22.0wt% and 32.0wt% and between 22.0wt% and 29.0wt%.

In a preferred embodiment, milk fat and lactose contribute to the milk solids, preferably wherein milk fat provides between 7.0wt% and 15.0wt% and lactose provides between 1.5wt% and 7.0wt%, preferably milk fat provides between 7.5wt% and 12.5wt% and lactose provides between 2.5 and 6.0wt%.

In a preferred embodiment, the milk solids are obtained from liquid milk (whole, skimmed, lactose-free etc.), milk pre-concentrate, lactose-free milk powder, whole-fat milk powder, skimmed-fat milk powder, or anhydrous milk fat and combinations thereof.

In an embodiment, the milk product may be treated to at least partially reduce the lactose content. In an embodiment, the lactose is reduced using hydrolysis, preferably enzymatic hydrolysis. In a preferred embodiment, the lactose is reduced by between 30.0wt% and 100.0wt% or between 40.0wt% and 60.0wt%.

### Hydrocolloid

A hydrocolloid may be present in the compositions of the present invention. In other embodiments, a hydrocolloid is not present.

In a preferred embodiment, when the composition of the present invention comprises a hydrocolloid, it is preferably in an amount of between 0.05wt% and 1.0wt%, preferably between 0.1wt% and 0.5wt%, preferably 0.2wt% and 0.45wt%%, and more preferably 0.125wt% and 0.25wt%.

In a preferred embodiment, the hydrocolloid is selected from the group comprising pectin, alginates, carrageenan, agar, carboxymethylcellulose, methylcellulose, methylethylcellulose, hydroxypropylcellulose, microcrystalline cellulose, gelatin and gums such as xanthan, Arabic, gellan, carob, karaya, konjac and traganth. In a preferred embodiment, the hydrocolloid is pectin, preferably low methoxy pectin.

The hydrocolloid aids the preparation of the characteristic texture of dulce de leche in combination with the sugar distribution used.

### Sugar Alcohol

In an embodiment, the composition comprises a sugar alcohol in an amount of less than 10.0wt%, less than 7.5wt% or less than 5.0wt%. In an embodiment, the sugar alcohol is present in an amount of greater than 0.5wt%, greater than 1.0wt% or greater than 2.0wt%, for example between 0.5wt% and 10.0wt% or 1.0wt% and 5.0wt%.

The sugar alcohol is preferably selected from mannitol, sorbitol, xylitol, lactitol, isomalt, maltitol and hydrogenated starch hydrolysates, preferably sorbitol.

The sugar alcohol humectant may be used to control the impact of water in the confectionery products of this invention.

In a preferred embodiment, the composition of the present invention does not comprise a sugar alcohol. In a preferred embodiment, does not comprises equates to less than 1.0wt%, preferably less than 0.5wt% and most preferably 0.0wt%.

### Optional Additives

In an embodiment, the composition of the present invention may be combined with other ingredients, preferably ingredients that are used in confectionery filling compositions, i.e. the composition of the present invention may be used in isolation as a filling composition or may be an ingredient in a filling composition.

For example, the filling may also comprise nuts, fruit-based ingredients (e.g. dehydrate fruit pieces and/or fruit-powders), chocolate or chocolate analogues, baked inclusions (e.g. biscuit pieces) and combinations thereof.

### Physical Properties and Stability

In an embodiment, the stability and organoleptic properties, preferably grittiness, are, without being bound by theory, the degree of crystallization and crystal particle size distribution within the composition. The use of the stabilizing agents of the present invention contributes to controlling these properties such that the compositions are stable and do not have unpleasant organoleptic properties.

In a preferred embodiment, the composition comprises crystals with a D90 of less than 120 microns, preferably less than 100 microns, preferably less than 90 microns, preferably less than 80 microns, preferably less than 75 microns, preferably less than 70 microns and preferably less than 60 microns. In a preferred embodiment, the D90 is greater than 5.0 microns, preferably greater than 7.5 microns and preferably greater than 10.0 microns. Preferred D90 crystal particle sizes are from 5.0 microns to 120 microns, 7.5 microns to 90 microns and most preferably 10.0 microns to 75 microns and 10.0 microns to 60.0 microns.

In a preferred embodiment and in the examples, the particle size is measured using the CamSizer microscopy method defined below.

As noted in the examples, the compositions of the present invention maintain stability and organoleptic properties over a significant time period in contrary to the comparative examples tested.

### Process

In a preferred embodiment of the present invention provided is a process for preparing the compositions of the present invention.

The process comprises:
combining a sugar source and a liquid milk solids source to provide a mixture,
concentrating by heating and stirring the mixture to reduce the water content to produce a syrup, and
cooling the syrup to below 65.0°C.

The cooling step is preferably carried out to below 62.5°C, and preferably below 60.0°C. Preferably the cooling step is carried out to above 20°C, preferably above 25°C or 35°C.

The heating and concentrating steps may be carried out in known equipment, for example, an open-top pan or pre-concentration in a vacuum evaporator and termination in an open-top pan.

In an embodiment, during the concentration (evaporation) step, the stirring is a rate of between 50 and 100 rpm, preferably between 65 and 90 rpm.

In an embodiment, the concentration step is carried out for a period of between 30 minutes and 6 hours, preferably between 1 and 3.5 hours.

In a preferred embodiment, the concentrating and heating step is carried out a temperature of between 70°C and 120°C, preferably between 75°C and 110°C, and preferably between 80°C and 100°C.

In a preferred embodiment, the concentrating step ends when the syrup reaches a Brix value of between 65 and 72, preferably between 68 and 70 Brix. In a preferred embodiment, the Brix value of the is measured using a hand-held refractometer as is standard in the art.

### Sugar Source

In a preferred embodiment, a sugar source of the present invention comprises a syrup, preferably a fructose syrup, i.e. a syrup that comprises fructose, and/or a glucose syrup.

It is preferred that the syrups used in the present invention have a total solids content of between 60.0wt% and 90.0wt%, preferably between 65.0wt% and 85.0wt% and most preferably between 70.0wt% and 82.0wt%.

The selection of such syrups affords a control in respect of the water content of the composition and a control of a texture that is not significantly hard.

In a preferred embodiment, the sucrose may be added as powdered sucrose, as is standard in the art.

### Particle size

The particle size distribution (weighted in volume) for a powder can be determined by automatized microscopy technique. This may be obtained using a CamSizer (Camsizer XT Retsch) or by dispersing the particle in water using a rotor-stator and performing light scattering. For a liquid, it can be determined using light scattering. In the following text, D90 is always used for a volume weighted size distribution and describe the particle diameter. Volume weighted size distribution is very familiar for one skilled in the art.

For microparticulates (e.g. particularly particles of 1 micron or greater, and preferably 1 to 1000 microns), particle size distribution is preferably measured by laser light diffraction, e.g. using a Mastersizer 3000, Malvern Instruments Ltd, Malvern UK with Fraunhoffer theory or Mie theory (absorption index 0.01, RI sucrose 1.538) in a "wet system" using a Hydro SM attachment and AAK Akomed R MCT oil dispersant RI 1.45. In a "wet system", the sample is placed in the MCT oil and sonicated for 2 minutes with an ultrasonic probe before being run in the Malvern 3000 with a Hydro SM wet dispersion unit, in duplicate. In a "dry system", the sample is placed into the Aero S automatic dry dispersion unit before being run in the Malvern 3000, in duplicate.

### Confectionery Filling Composition

As mentioned above, the composition of the present invention is preferably a material for providing a filling for a confectionery product.

The filing composition of the invention may be sweet, e.g. a confectionary filling for use in a composite product such as a sandwich, a biscuit, a wafer, or other composite confectionary product. The filling composition may provide a lipid-based topping, e.g. for use on top of a composite product, or a spread.

However, the most advantageous use of the filling compositions of the present invention is for use as fillings in chocolate or chocolate analogue products.

This is because the present invention allows an increase in stability without significantly affecting texture nor sensory attributes of the filling and the final product. This is particularly important for confectionery products where the eating experience is key for the product.

Furthermore, a long shelf life stability is important for fillings owing to the relatively long shelf life of chocolate and chocolate analogues, i.e. the filling needs to be stable for as long as the chocolate. This is a difference of filling chocolate products as compared to making fillings for sandwich biscuits where the biscuit has a shorter shelf life than chocolate. However, for aqueous-based fillings, the control of the stability and moisture retention is particularly important for confectionery products - moisture leakage may lead to product spoiling.

An embodiment of the present invention provides a foodstuff comprising the filling composition of the present invention, preferably the foodstuff is a confectionery product, preferably a chocolate (or equivalents thereof, such as compound) product.

In a highly preferred embodiment, the present invention provides a filled chocolate or chocolate-analogue shell, filled with the filling of the present invention.

In a preferred embodiment, the filling of the present invention is not-baked, i.e. it is not included in a foodstuff which requires further cooking after the filling has been deposited.

In an embodiment, provided is a filled foodstuff product, preferably a filled chocolate product, preferably a chocolate shell filled with the filling of the invention, that comprises from 5 to 95% by weight of the product of the filling of the invention, preferably from 10 to 90%, preferably from 20 to 70% or from 30 to 50%.

Preferably, the remainder of the product being a shell of chocolate-like material such as compound or chocolate that substantially encloses (for example completely encloses) the product. Hence, in an embodiment, the chocolate-like material may comprise from 5 to 95% by weight of the product, preferably from 10 to 90%, preferably from 30 to 80% or from 50 to 70%.

Another embodiment of the invention provides a chocolate confectionery product, which comprises a filling of the present invention surrounded by an outer layer of a chocolate product, for example, a praline, chocolate shell product, a truffle, a filled-tablet and/or chocolate coated wafer or biscuit any of which may or may not be layered. The chocolate coating can be applied or created by any suitable means, such as enrobing, cold stamping (frozen cone, cold forming, etc.) or moulding.

The above embodiments relating to filled chocolate products are highly preferred.

In an embodiment, compositions of the invention may usefully be chocolate products (as defined herein), more usefully be chocolate or a chocolate compound. Independent of any other legal definitions that may be used compositions of the invention that comprises a cocoa solids content of from 25% to 35% by weight together with a milk ingredient (such as milk powder) may be informally referred to herein as 'milk chocolate' (which term also encompasses other analogous chocolate products, with similar amounts of cocoa-solids or replacements therefor). Independent of any other legal definitions that may be used compositions of the invention that comprises a cocoa solids content of more than 35% by weight (up to 100% (i.e. pure cocoa solids) may be informally referred to herein as 'dark chocolate' (which term also encompasses other analogous chocolate products, with similar amounts of cocoa-solids or replacements therefor).

The term 'chocolate' as used herein denotes any product (and/or component thereof if it would be a product) that meets a legal definition of chocolate in any jurisdiction and also include product (and/or component thereof) in which all or part of the cocoa butter (CB) is replaced by cocoa butter equivalents (CBE) and/or cocoa butter replacers (CBR).

The term 'chocolate compound' as used herein (unless the context clearly indicates otherwise) denote chocolate-like analogues characterized by presence of cocoa solids (which include cocoa liquor/mass, cocoa butter and cocoa powder) in any amount, notwithstanding that in some jurisdictions compound may be legally defined by the presence of a minimum amount of cocoa solids.

The term 'chocolate product' as used herein denote chocolate, compound and other related materials that comprise cocoa butter (CB), cocoa butter equivalents (CBE), cocoa butter replacers (CBR) and/or cocoa butter substitutes (CBS). Thus, chocolate product includes products that are based on chocolate and/or chocolate analogues, and thus for example may be based on dark, milk or white chocolate.

Unless the context clearly indicates, otherwise it will also be appreciated that in the present invention, any one chocolate product may be used to replace any other chocolate product and neither the term chocolate nor compound should be considered as limiting the scope of the invention to a specific type of chocolate product. Preferred chocolate product comprises chocolate and/or compound, more preferred chocolate product comprises chocolate, most preferred chocolate product comprises chocolate as legally defined in a major jurisdiction (such as Brazil, EU and/or US).

In another preferred embodiment of the invention the foodstuff comprises a multi-layer coated chocolate product comprising a plurality of layers of wafer, chocolate product, biscuit and/or baked foodstuff, with filling sandwiched between them, with at least one layer or coating being a chocolate product (e.g. chocolate). Most preferably the multi-layer product comprises a chocolate product confectionery product (e.g. as described herein) selected from sandwich biscuit(s), cookie(s), wafer(s), muffin(s), extruded snack(s) and/or praline(s). An example of such a product is a multilayer laminate of baked wafer and/or biscuit layers sandwiched with filling(s) and coated with chocolate.

According to another aspect, there is provided a composite product comprising the filling composition according to the invention. The composite product may be, for instance, a sandwich, biscuit, cracker, wafer, or bakery foodstuff product comprising the filling composition of the invention as a filling or as a topping.

Specifically, baked foodstuffs used in the invention may be sweet or savoury. Preferred baked foodstuffs may comprise baked grain foodstuffs, which term includes foodstuffs that comprise cereals and/or pulses. Baked cereal foodstuffs are more preferred, most preferably baked wheat foodstuffs such as wafer(s), cracker(s), cookie(s), muffin(s), extruded snack(s) and/or biscuit(s).

Wafers may be flat or shaped (for example into a cone or basket for ice cream) and biscuits may have many different shapes. More preferred wafers are non-savoury wafers, for example having a sweet or plain flavour.

A non-limiting list of those possible baked foodstuffs used in the present invention are selected from: biscuits, cakes, breads, pastries and/or pies; such as from the group consisting of: rusk, saltine, pretzel, ANZAC biscuit, biscotti, flapjack, kurabiye, lebkuchen, leckerli, macroon, bourbon biscuit, butter cookie, digestive biscuit, custard cream, extruded snacks, florentine, garibaldi gingerbread, koulourakia, kourabiedes, Linzer torte, muffin, oreo, Nice biscuit, peanut butter cookie, polvorón, pizzelle, pretzel, croissant, shortbread, cookie, fruit pie (e.g. apple pie, cherry pie), lemon drizzle cake, banana bread, carrot cake, pecan pie, apple strudel, baklava, berliner, bichon au citron and/or similar products

In a preferred embodiment of the present invention, the baked product is a biscuit or a cookie.

One embodiment of the invention provides a multi-layer product optionally comprising a plurality of layers of baked foodstuff (preferably selected from one or more wafer and/or biscuit layers), and a coating layer located around these layers, wherein the filling composition of the invention is present between at least two of the layers of baked foodstuff and/or a layer of the baked foodstuff and the coating layer, preferably the coating layer is a chocolate product.

The invention will now be described in further details in the following non-limiting examples.

### Examples

### Ingredients Used

Invert syrup - 40% of each of dextrose and fructose, remainder water
Citrate - Trisodium Citrate
Phosphate - Di-potassium phosphate
41/63 DE - 41/63 Dextrose Equivalent Glucose Syrup, 80% and 82% total solids
Isosweet 111 - Fructose Glucose Syrup, 71wt% total solids
WMP - hydrolysed reconstituted whole milk powder
SMP - skimmed milk powder
AMF - anhydrous milk fat
60% WMP - 60% hydrolysed whole milk powder
Invertose - Invertose 026550, Ingredion, 77.0% total solids
F75 Tereos - High fructose syrup from Tereos
*Process Used to Prepare Compositions*

The examples were prepared using the following process:
Dry mix milk powders together.
Dry mix Sugar, citrate (if present) & pectin (if present) together.
Weigh Milk fat and syrup (if present) independently.
Add the milk powder mix to pre-heated water (~65°C) and mix using handheld high-shear mixer until there are no lumps (mix outside of BCH pan to avoid fouling on pan walls). Leave to stand 1 hour. If reconstituted WMP is used, this step relates to the preparation of that ingredient.
Mix citrate (if present) and pectin (if present) into the bucket containing the milk powder mix and leave to stand for 1 hour.
Pour mix to pan. Add Sugar, Milk Fat & sugar syrup (if present) (if present, add sorbitol with sugar).
Cook using free flow of steam.
Cook for further 3 hours. Cook time: 3 hours, temperature of cook: 100°C in jacket, product at 98°C and collect sample from each batch for measuring Aw at end of cook.
Cool to approx. 60 degrees C.

| **Ingredient** | **Comparative Example 1** | **Comparative Example 2** | **Comparative Example 3** | **Comparative Example 4** | **Comparative Example 5** | **Comparative Example 6** | **Comparative Example 7** | **Comparative Example 8** | **Comparative Example 9** |
|---|---|---|---|---|---|---|---|---|---|
| Sorbitol | 4.6 | | | | | | | | |
| WMP | 47.2 | 49.4 | 46.5 | 44.8 | 44.8 | 44.8 | 44.4 | 44.6 | 44.95 |
| Sucrose | 29.0 | 30.4 | 28.6 | 27.5 | 27.5 | 27.5 | 24.1 | 27.4 | 27.6 |
| Fructose | 19.3 | 20.2 | | | | | | | |
| Invert Syrup | | | 24.9 | 24.0 | 24.0 | 24.0 | 27.6 | 23.9 | 13.6 |
| AMF | | | | 3.7 | 3.4 | 3.4 | 3.4 | 3.4 | 3.4 |
| Citrate | | | | | 0.3 | | | 0.3 | |
| Phosphate | | | | | | 0.3 | | | |
| Pectin | | | | | | | 0.5 | 0.5 | |
| 41 DE | | | | | | | | | 10.43 |
| | | | | | | | | | |

| **Final** | | | | | | | | | |
|---|---|---|---|---|---|---|---|---|---|
| Fat | 6.2 | 6.6 | 6.5 | 10.4 | 10.0 | 10.0 | 10.1 | 10.0 | 10.1 |
| Protein | 6.1 | 6.5 | 6.4 | 6.0 | 6.0 | 6.0 | 6.0 | 6.0 | 6.1 |
| Sucrose | 31.5 | 33.6 | 33.1 | 31.4 | 31.4 | 31.4 | 27.7 | 31.2 | 31.5 |
| Dextrose | 4.3 | 4.6 | 16.1 | 15.2 | 15.2 | 15.2 | 17.0 | 15.1 | 12.3 |
| Fructose | 21.0 | 22.4 | 11.5 | 10.9 | 10.9 | 10.9 | 12.7 | 10.9 | 6.2 |
| Galactose | 4.0 | 4.6 | 4.5 | 4.3 | 4.3 | 4.3 | 4.3 | 4.3 | 4.3 |
| Lactose | | | | | | | | | |
| Maltose | | | | | | | | | 1.3 |
| Maltotriose | | | | | | | | | 1.0 |
| Sorbitol | 5.0 | | | | | | | | |

| **Ingredient** | **Comparative Example 10** | **Comparative Example 11** | **Comparative Example 12 (4.3% water)** |
|---|---|---|---|
| Sorbitol | | | |
| WMP | | | 42.9 |
| 60% WMP | 45.0 | 45.0 | |
| Sucrose | 27.6 | 27.6 | 26.3 |
| Fructose | | | |
| Invert Syrup | 24.1 | 21.7 | |
| AMF | 3.4 | 3.4 | 3.2 |
| Citrate | | | 0.3 |
| Phosphate | | | |
| Pectin | | | |
| 41 DE | | 2.4 | 2.30 |
| Isosweet 111 | | | 20.7 |

| **Final** | | | |
|---|---|---|---|
| Fat | 10.1 | 10.1 | 10.3 |
| Protein | 6.1 | 6.1 | 6.2 |
| Sucrose | 31.5 | 31.5 | 32.3 |
| Dextrose | 13.6 | 12.9 | 11.2 |
| Fructose | 11.0 | 9.9 | 5.2 |
| Galactose | 2.5 | 2.6 | 4.4 |
| Lactose | 3.5 | 3.5 | |
| Maltose | | 0.29 | 1.06 |
| Maltotriose | | 0.22 | 0.48 |
| Sorbitol | | | |

| **Ingredient** | **Comparative Example 13** | **Comparative Example 14** | **Comparative Example 15** | **Comparative Example 17** | **Comparative Example 18** | **Comparative Example 19** | **Example 1** |
|---|---|---|---|---|---|---|---|
| Sorbitol | | | | | 4.5 | | |
| SMP | 7.1 | 6.7 | 6.5 | 6.2 | 6.3 | 6.53 | 6.25 |
| SMP Lactose free | 10.6 | 10.1 | 9.8 | 9.3 | 9.5 | 9.8 | 9.38 |
| Sucrose | 27.3 | 28.3 | 29.5 | 28.3 | 25.8 | 29.7 | 14.43 |
| Invert Syrup | | | | | | | |
| AMF | 5.93 | 5.7 | 7.7 | 7.9 | 8.0 | 7.7 | 7.51 |
| Citrate | 0.15 | 0.15 | 0.16 | 0.2 | 0.2 | 0.16 | 0.14 |
| F75 Tereos | | | | 26.2 | 23.8 | | |
| Pectin | 0.18 | 0.31 | 0.33 | 0.3 | 0.3 | 0.4 | 0.40 |
| 41 DE | 4.8 | 4.5 | 1.1 | 2.6 | 2.7 | | 7.70 |
| Invertose | | | 25.2 | | | 25.8 | 35.12 |
| Isosweet 111 | 22.5 | 23.8 | | | | | |
| Water | 21.5 | 20.5 | 19.85 | 19.0 | 19.3 | 20.0 | 19.07 |

| **Final** | | | | | | | |
|---|---|---|---|---|---|---|---|
| Fat | 6.8 | 6.5 | 8.4 | 8.8 | 8.8 | 8.4 | 8.8 |
| Protein | 7.2 | 6.8 | 6.4 | 6.2 | 6.3 | 6.4 | 6.6 |
| Sucrose | 31.0 | 31.8 | 32.0 | 31.4 | 28.4 | 32.2 | 16.77 |
| Dextrose | 10.4 | 10.4 | 11.4 | 7.1 | 6.7 | 11.5 | 18.67 |
| Fructose | 5.3 | 5.5 | 11.6 | 15.8 | 14.20 | 12.0 | 11.88 |
| Galactose | 3.1 | 2.9 | 2.8 | 2.7 | 2.7 | 2.8 | 2.83 |
| Lactose | 4.3 | 4.0 | 3.7 | 3.7 | 3.7 | 3.8 | 3.86 |
| Maltose | 1.3 | 1.3 | 0.61 | 0.6 | 0.5 | 0.5 | 2.18 |
| Maltotriose | 0.69 | 0.68 | 0.2 | 0.33 | 0.33 | 0.1 | 1.13 |
| Sorbitol | | | | | 4.91 | | |

| **Ingredient** | **Example 2** |
|---|---|
| SMP | 6.26 |
| SMP Lactose free | 9.4 |
| Sucrose | 14.45 |
| Invert Syrup | |
| AMF | 7.51 |
| Citrate | 0.14 |
| F75 Tereos | |
| Pectin | 0.31 |
| 41 DE | 7.70 |
| Invertose | 35.15 |
| Isosweet 111 | |
| Potassium sorbate | |
| Water | 19.08 |

| **Final** | |
|---|---|
| Fat | 8.6 |
| Protein | 6.4 |
| Sucrose | 16.3 |
| Dextrose | 16.37 |
| Fructose | 16.92 |
| Galactose | 2.75 |
| Lactose | 3.75 |
| Maltose | 1.62 |
| Maltotriose | 0.8 |

The studies were all assessed organoleptically and it was found all examples other than the Inventive Examples were gritty and unpleasant to eat.

The samples were assessed by a panel of trained panellists using the following procedure.

The panellists assessed the grittiness of the samples. The panellists gave the samples a score with higher scores for more negative properties. The samples within the scope of the invention were all scored 0, i.e. not gritty, and the comparative examples were all found to be gritty.

Upon further technical assessment, it was found the comparative examples had Aw values of greater than 0.70, whereas the inventive examples were all lower than 0.67.

In respect of the examples using 41 DE syrup, it is considered that one skilled in the art would have expected the addition of this component to decrease the rate of crystallization as owing to the use of longer chain oligosaccharides being tolerant to supersaturation sugar crystallization. However, as is shown in the examples, in the system of the present invention, the addition of this compound alone did not stabilize the composition.

Similarly, the addition of sorbitol, a sugar alcohol humectant used to control the impact of water in confectionery products, did not provide any improvement in crystallization stability.

Furthermore, the use of a hydrocolloid in the absence of the invention did not provide the expected control of "body" and characteristic texture of Dulce de leche, in contrast to the invention and also did not prohibit crystallisation.

Significant large crystal formation was not observed in Examples 1 and 2 but it was observed in all of the comparative examples using microscopy (as described above). This large crystal formation leads to a gritty mouth feel and a lack of stability.

Examples 1 and 2 and Comparative Examples 7 and 18 were stored at ambient conditions for 1, 2 and 3 months. There was no increase in crystallization size (again assessed by comparative microscopy) over these time periods for the inventive examples and upon tasting using the above assessment were not found to be gritty. The sample with pectin and sorbitol in combination was found to increase significantly in grittiness on storage.

Karl Fischer analysis was carried out on Examples 1 and 2 for a number of samples for each example. The moisture analysis showed moisture contents between 18wt% and 20wt% as the extreme values.

## Claims

1. A confectionery composition comprising:
water in an amount of 10.0-30.0 wt%,
a sucrose content of less than 25.0wt%,
a combination of at least two of L-glucose, D-glucose (dextrose), fructose, maltose and maltotriose in an amount of 20.0-45.0wt%, and
milk solids in an amount of 15.0-35.0wt%.

2. The composition of claim 1, wherein the sucrose content is greater than or equal to 5.0wt%.

3. The composition of claim 2, wherein sucrose content is greater than or equal to 10.0wt%.

4. The composition of any of claims 1 to 3, wherein the sucrose content is less than or equal to 19.0wt%

5. The composition of any of claims 1 to 4, wherein the composition comprises a glucose syrup.

6. The composition of claim 5, wherein the glucose syrup has a DE value in the range of 35-95 and is present in an amount of 2.5-15.0wt%.

7. The composition of any of claims 1 to 6, wherein the amount of water is 11.0-27.5wt%, preferably 12.0-25.0wt%, preferably 12.5-22.5wt%, and preferably 13.0-20.0wt%.

8. The composition of any of claims 1 to 7, wherein the composition comprises a fructose corn syrup preferably in an amount of 20.0-45.0wt%, preferably 25.0wt%-40.0wt%.

9. The composition of any of claims 1 to 8, wherein the combination of least two of L-glucose, dextrose, fructose, maltose and maltotriose is in an amount of 22.0-40.0wt%, preferably 25.0-37.5wt%.

10. The composition of any of claims 1 to 9, wherein the combination of dextrose, fructose, maltose and maltotriose comprises at least three, more preferably four, of dextrose, fructose, maltose and maltotriose.

11. The composition of any of claims 1 to 10, wherein the composition does not comprise a hydrocolloid or comprises a hydrocolloid in an amount of 0.05-1.0wt%, preferably 0.1-0.5wt%%, and more preferably 0.125-0.25wt%.

12. The composition of any of claims 1 to 11, wherein the composition comprises the milk solids in an amount of 18.0-35.0wt%, preferably 22.0-32.0wt%.

13. The composition of any of claims 1 to 12, wherein milk fat provides 7.0-15.0wt% and lactose provides 1.5-7.0wt%, preferably milk fat provides 7.5-12.5wt% and lactose provides 2.5-6.0wt%.

14. The composition of claim 12 or claim 13, wherein the milk solids comprise lactose-free milk powder, whole-fat milk powder or anhydrous milk fat and combinations thereof.

15. The composition of any of claims 1 to 14, wherein the composition comprises galactose in an amount of 1.5-4.5wt%, preferably 2.0-3.75wt%.

16. The composition of any of claims 1 to 15, wherein dextrose is present in an amount of 10.0-25.0wt%, preferably 16.0-22.5wt%.

17. The composition of any of claims 1 to 16, wherein fructose is present in an amount of 5.0-25.0wt%, preferably 7.5-20.0wt%.

18. The composition of any of claims 1 to 17, wherein maltose is present in an amount of 0.02-3.5wt%, preferably 0.05-3.0wt%.

19. The composition of any of claims 1 to 18, wherein maltotriose is present in an amount of 0.02-2.5wt%, preferably 0.05-2.0wt%.

20. The composition of any of claims 1 to 19, wherein the composition comprises a total carbohydrate content of between 50.0 wt% and 70.0wt%, preferably between 52.5 wt% and 67.5wt%.

21. The composition of any of claims 1 to 20, wherein the composition comprises a non-milk based total carbohydrate content of from 45.0-65.0wt%, preferably from 50.0-60.0wt%.

22. A filled confectionery product comprising the composition of any of claims 1 to 21 as a filling.

## Patentansprüche

1. Süßwarenzusammensetzung, umfassend:
Wasser in einer Menge von 10,0-30,0 Gew.-%,
einen Saccharosegehalt von weniger als 25,0 Gew.-%,
eine Kombination aus mindestens zwei von L-Glucose, D-Glucose (Dextrose), Fructose, Maltose und
Maltotriose in einer Menge von 20,0-45,0 Gew.-% und
Milchtrockenmasse in einer Menge von 15,0-35,0 Gew.-%.

2. Zusammensetzung nach Anspruch 1, wobei der Saccharosegehalt größer als oder gleich 5,0 Gew.-% ist.

3. Zusammensetzung nach Anspruch 2, wobei der Saccharosegehalt größer als oder gleich 10,0 Gew.-% ist.

4. Zusammensetzung nach einem der Ansprüche 1 bis 3, wobei der Saccharosegehalt kleiner als oder gleich 19,0 Gew.-% ist.

5. Zusammensetzung nach einem der Ansprüche 1 bis 4, wobei die Zusammensetzung einen Glucosesirup umfasst.

6. Zusammensetzung nach Anspruch 5, wobei der Glucosesirup einen DE-Wert im Bereich von 35-95 aufweist und in einer Menge von 2,5-15,0 Gew.-% vorhanden ist.

7. Zusammensetzung nach einem der Ansprüche 1 bis 6, wobei die Wassermenge 11,0-27,5 Gew.-%, vorzugsweise 12,0-25,0 Gew.-%, vorzugsweise 12,5-22,5 Gew.-% und vorzugsweise 13,0-20,0 Gew.-%, beträgt.

8. Zusammensetzung nach einem der Ansprüche 1 bis 7, wobei die Zusammensetzung einen Fructosemaissirup, vorzugsweise in einer Menge von 20,0-45,0 Gew.-%, vorzugsweise 25,0 Gew.-%-40,0 Gew.-%, umfasst.

9. Zusammensetzung nach einem der Ansprüche 1 bis 8, wobei die Kombination aus mindestens zwei von L-Glucose, Dextrose, Fructose, Maltose und Maltotriose, in einer Menge von 22,0-40,0 Gew.-%, vorzugsweise 25,0-37,5 Gew.-%, vorliegt.

10. Zusammensetzung nach einem der Ansprüche 1 bis 9, wobei die Kombination aus Dextrose, Fructose, Maltose und Maltotriose mindestens drei, mehr bevorzugt vier, von Dextrose, Fructose, Maltose und Maltotriose umfasst.

11. Zusammensetzung nach einem der Ansprüche 1 bis 10, wobei die Zusammensetzung kein Hydrokolloid umfasst oder ein Hydrokolloid in einer Menge von 0,05-1,0 Gew.-%, vorzugsweise 0,1-0,5 Gew.-% und mehr bevorzugt 0,125-0,25 Gew.-%, umfasst.

12. Zusammensetzung nach einem der Ansprüche 1 bis 11, wobei die Zusammensetzung die Milchtrockenmasse in einer Menge von 18,0-35,0 Gew.-%, vorzugsweise 22,0-32,0 Gew.-%, umfasst.

13. Zusammensetzung nach einem der Ansprüche 1 bis 12, wobei Milchfett 7,0-15,0 Gew.-% ausmacht und Lactose 1,5-7,0 Gew.-% ausmacht, vorzugsweise Milchfett 7,5-12,5 Gew.-% ausmacht und Lactose 2,5-6,0 Gew.-% ausmacht.

14. Zusammensetzung nach Anspruch 12 oder 13, wobei die Milchtrockenmasse laktosefreies Milchpulver, Vollmilchpulver oder wasserfreies Milchfett und Kombinationen davon umfasst.

15. Zusammensetzung nach einem der Ansprüche 1 bis 14, wobei die Zusammensetzung Galactose in einer Menge von 1,5-4,5 Gew.-%, vorzugsweise 2,0-3,75 Gew.-%, umfasst.

16. Zusammensetzung nach einem der Ansprüche 1 bis 15, wobei Dextrose in einer Menge von 10,0-25,0 Gew.-%, vorzugsweise 16,0-22,5 Gew.-%, vorhanden ist.

17. Zusammensetzung nach einem der Ansprüche 1 bis 16, wobei Fructose in einer Menge von 5,0-25,0 Gew.-%, vorzugsweise 7,5-20,0 Gew.-%, vorhanden ist.

18. Zusammensetzung nach einem der Ansprüche 1 bis 17, wobei Maltose in einer Menge von 0,02-3,5 Gew.-%, vorzugsweise 0,05-3,0 Gew.-%, vorhanden ist.

19. Zusammensetzung nach einem der Ansprüche 1 bis 18, wobei Maltotriose in einer Menge von 0,02-2,5 Gew.-%, vorzugsweise 0,05-2,0 Gew.-%, vorhanden ist.

20. Zusammensetzung nach einem der Ansprüche 1 bis 19, wobei die Zusammensetzung einen Gesamtkohlenhydratgehalt zwischen 50,0 Gew.-% und 70,0 Gew.-%, vorzugsweise zwischen 52,5 Gew.-% und 67,5 Gew.-%, umfasst.

21. Zusammensetzung nach einem der Ansprüche 1 bis 20, wobei die Zusammensetzung einen nicht auf Milch basierenden Gesamtkohlenhydratgehalt von 45,0-65,0 Gew.-%, vorzugsweise von 50,0-60,0 Gew.-%, umfasst.

22. Gefülltes Süßwarenprodukt, umfassend die Zusammensetzung nach einem der Ansprüche 1 bis 21 als eine Füllung.

## Revendications

1. Composition de confiserie, comprenant :
de l'eau en une quantité de 10,0 à 30,0 % en poids,
une teneur en saccharose inférieure à 25,0 % en poids,
une combinaison d'au moins deux parmi L-glucose, D-glucose (dextrose), fructose, maltose et
maltotriose en une quantité de 20,0 à 45,0 % en poids, et
des matières sèches de lait en une quantité de 15,0 à 35,0 % en poids.

2. Composition selon la revendication 1, dans laquelle la teneur en saccharose est supérieure ou égale à 5,0 % en poids.

3. Composition selon la revendication 2, dans laquelle une teneur en saccharose est supérieure ou égale à 10,0 % en poids.

4. Composition selon l'une quelconque des revendications 1 à 3, dans laquelle la teneur en saccharose est inférieure ou égale à 19,0 % en poids

5. Composition selon l'une quelconque des revendications 1 à 4, dans laquelle la composition comprend un sirop de glucose.

6. Composition selon la revendication 5, dans laquelle le sirop de glucose a une valeur DE comprise dans la plage de 35 à 95 et est présent en une quantité de 2,5 à 15,0 % en poids.

7. Composition selon l'une quelconque des revendications 1 à 6, dans laquelle la quantité d'eau est de 11,0 à 27,5 % en poids, de préférence 12,0 à 25,0 % en poids, de préférence 12,5 à 22,5 % en poids, et de préférence 13,0 à 20,0 % en poids.

8. Composition selon l'une quelconque des revendications 1 à 7, dans laquelle la composition comprend un sirop de maïs à teneur en fructose, de préférence en une quantité de 20,0 à 45,0 % en poids, de préférence 25,0 à 40,0 % en poids.

9. Composition selon l'une quelconque des revendications 1 à 8, dans laquelle la combinaison d'au moins deux parmi L-glucose, dextrose, fructose, maltose et maltotriose est en une quantité de 22,0 à 40,0 % en poids, de préférence 25,0 à 37,5 % en poids.

10. Composition selon l'une quelconque des revendications 1 à 9, dans laquelle la combinaison de dextrose, fructose, maltose et maltotriose comprend au moins trois, de préférence quatre, parmi dextrose, fructose, maltose et maltotriose.

11. Composition selon l'une quelconque des revendications 1 à 10, dans laquelle la composition ne comprend pas d'hydrocolloïde ou comprend un hydrocolloïde en une quantité de 0,05 à 1,0 % en poids, de préférence 0,1 à 0,5 % en poids, et plus préférablement 0,125 à 0,25 % en poids.

12. Composition selon l'une quelconque des revendications 1 à 11, dans laquelle la composition comprend les matières sèches de lait en une quantité de 18,0 à 35,0 % en poids, de préférence 22,0 à 32,0 % en poids.

13. Composition selon l'une quelconque des revendications 1 à 12, dans laquelle la matière grasse laitière représente de 7,0 à 15,0 % en poids et le lactose représente de 1,5 à 7,0 % en poids, de préférence la matière grasse laitière représente de 7,5 à 12,5 % en poids et le lactose représente de 2,5 à 6,0 % en poids.

14. Composition selon la revendication 12 ou la revendication 13, dans laquelle les matières sèches de lait comprennent du lait en poudre sans lactose, du lait en poudre entier ou de la matière grasse laitière anhydre et des combinaisons de ceux-ci.

15. Composition selon l'une quelconque des revendications 1 à 14, dans laquelle la composition comprend du galactose en une quantité de 1,5 à 4,5 % en poids, de préférence de 2,0 à 3,75 % en poids.

16. Composition selon l'une quelconque des revendications 1 à 15, dans laquelle le dextrose est présent en une quantité de 10,0 à 25,0 % en poids, de préférence 16,0 à 22,5 % en poids.

17. Composition selon l'une quelconque des revendications 1 à 16, dans laquelle le fructose est présent en une quantité de 5,0 à 25,0 % en poids, de préférence 7,5 à 20,0 % en poids.

18. Composition selon l'une quelconque des revendications 1 à 17, dans laquelle le maltose est présent en une quantité de 0,02 à 3,5 % en poids, de préférence de 0,05 à 3,0 % en poids.

19. Composition selon l'une quelconque des revendications 1 à 18, dans laquelle le maltotriose est présent en une quantité de 0,02 à 2,5 % en poids, de préférence de 0,05 à 2,0 % en poids.

20. Composition selon l'une quelconque des revendications 1 à 19, dans laquelle la composition comprend une teneur totale en hydrates de carbone comprise entre 50,0 % en poids et 70,0 % en poids, de préférence entre 52,5 % en poids et 67,5 % en poids.

21. Composition selon l'une quelconque des revendications 1 à 20, dans laquelle la composition comprend une teneur totale en glucides non laitiers de 45,0 à 65,0 % en poids, de préférence de 50,0 à 60,0 % en poids.

22. Produit de confiserie fourré comprenant la composition selon l'une quelconque des revendications 1 à 21 en tant que fourrage.
